# EUROPEAN PATENT SPECIFICATION

(11) **EP 4 411 023 B1**
(45) Date of publication and mention of the grant of the patent: **22.01.2025**
(21) Application number: 23154807.4
(22) Date of filing: 02.02.2023
(51) Int. Cl.: C25B 1/04, C25B 11/052, C25B 11/061, C25B 11/091

(54) **A PEROVSKITE ELECTRODE FOR ELECTROLYSIS IN ALKALINE MEDIA**
PEROWSKITELEKTRODE FÜR ELEKTROLYSE IN ALKALISCHEN MEDIEN
ELECTRODE EN PEROVSKITE POUR ÉLECTROLYSE EN MILIEU ALCALIN

(43) Date of publication of application: 07.08.2024
(73) Proprietor: OÜ Stargate Hydrogen Solutions, 11415 Tallinn (EE)
(72) Inventor: KÜNGAS, Rainer, 11415 Tallinn (EE)
(74) Representative: Sarap, Margus

(56) References cited:
- EP-A1- 3 444 383
- WANG YARONG ET AL: "Enhanced overall water electrolysis on a bifunctional perovskite oxide through interfacial engineering", ELECTROCHIMICA ACTA, ELSEVIER, AMSTERDAM, NL, vol. 318, 13 June 2019 (2019-06-13), pages 120 - 129, XP085760342, ISSN: 0013-4686, [retrieved on 20190613], DOI: 10.1016/J.ELECTACTA.2019.06.073
- ISLAM QUAZI ARIF ET AL: "Nanoparticle exsolution in perovskite oxide and its sustainable electrochemical energy systems", JOURNAL OF POWER SOURCES, ELSEVIER, AMSTERDAM, NL, vol. 492, 229626, 1 March 2021 (2021-03-01), pages 1 - 14, XP086521462, ISSN: 0378-7753, [retrieved on 20210301], DOI: 10.1016/J.JPOWSOUR.2021.229626
- KWON OHHUN ET AL: "Review on exsolution and its driving forces in perovskites", JOURNAL OF PHYSICS: ENERGY, vol. 2, no. 3, 0320001, 27 May 2020 (2020-05-27), pages 1 - 18, XP055893673, Retrieved from the Internet <URL:https://iopscience.iop.org/article/10.1088/2515-7655/ab8c1f/pdf> DOI: 10.1088/2515-7655/ab8c1f

## Description

### TECHNICAL FIELD

The present invention relates to an electrode for use in electrolysis, in particular, an electrode for use in the electrolysis of water under alkaline conditions. More specifically, the present invention relates to an electrode comprising a nickel metal substrate, a ceramic material with a perovskite-type structure comprising an oxide of at least one metal selected from among lanthanides including lanthanum, cerium and praseodymium, the said ceramic material forming a coating on the said metal substrate, and metal nanoparticles, wherein the said metal nanoparticles are socketed into the said ceramic material. The invention relates further to a method of producing the electrode. The invention relates further to an alkaline electrolysis stack comprising at least one such electrode, as well as a method for the electrolysis of water in alkaline conditions using the alkaline electrolysis stack.

### BACKGROUND ART

In alkaline water electrolysis, water is electrochemically converted into hydrogen and oxygen in alkaline conditions: H₂O = H₂ + 0.5 O₂. An electrolysis cell comprises two electrodes: an anode and a cathode. During operation, an electric potential is applied between the two electrodes, resulting in the flow of electrolysis current through the electrolysis cell. During operation, hydrogen is generated on the cathode according to the hydrogen evolution reaction (HER): 2H₂O + 2e⁻ = H₂ + 2OH⁻, while oxygen is generated on the anode according to the oxygen evolution reaction (OER): 2OH⁻ = 0.5O₂ + H₂O + 2e⁻. An alkaline electrolysis cell also comprises an electrolyte, which comprises a liquid alkaline medium such as an aqueous solution of hydroxides and/or carbonates. The electrolysis cell further comprises a porous separator and/or an ion exchange membrane capable of conducting hydroxide ions.

In alkaline water electrolysis, it is desirable to simultaneously minimize the investment cost and the energy consumption of the electrolysis cell. All else being equal, the lower the investment cost and the lower the energy consumption of the cell, the lower the production costs of hydrogen produced via electrolysis. The investment cost of the electrolysis cell is minimized when low-cost materials are used in the electrolysis cell and when such cells are produced using low-cost production methods. The energy consumption of the electrolysis cell is minimized when, for a fixed operating current or current density, the required applied electric potential (voltage) is minimized.

The required applied electric potential is a sum of several contributions and comprises: 1) the theoretical electric potential required to carry out the electrochemical reactions, 2) a potential due to the porous separator and/or ion exchange membrane, 3) an overpotential due to the anode, 4) an overpotential due to the cathode, 5) a potential that is dependent on the distance between the anode and the cathode in the electrolysis cell. Here, the term 'overpotential' refers to the difference between the theoretical and actual applied potential to each electrode, and includes the potential contribution due to e.g., bubble formation. It is known to those skilled in the arts that the overpotential of the anode (i.e., of the OER) is generally higher than the overpotential of the cathode (i.e., of the HER). Therefore, the development of improved electrodes for oxygen generation is highly relevant. In particular, such electrodes should comprise low-cost materials and be produced using low-cost fabrication methods, while exhibiting lower overpotentials towards OER than state-of-the art electrodes.

In industrial alkaline electrolysis cells, electrodes are either based on nickel or precious metals. Nickel-based electrodes are relatively low-cost, but are characterized by high overpotentials, resulting in high energy consumption of the cell, and, in turn, high production cost of hydrogen. In contrast, electrodes based on precious metals or their compounds (such as IrO₂, RuO₂, Pt) result in low overpotentials, but are very high in investment costs, resulting in high production cost of hydrogen. A third class of alkaline electrolysis electrode material has been discovered, which has been shown to exhibit low overpotentials while simultaneously being low-cost. Specifically, ceramic materials with specific crystal structures, such as the perovskite structure, have been shown to be a particularly attractive alternative to both nickel- and precious metal-based electrodes.

US 4497698, TEXAS A&M UNIVERSITY [US], filed 11/08/1983, describes an improved oxide for electrocatalytic oxygen evolution comprising a perovskite-type oxide made of lanthanum nickelate. The electrode is made of pressed and sintered lanthanum nickelate powder. The fabrication method is not suitable for industrial application and much more active perovskite-type oxides have been identified since then.

EP 3351659 A1, ASAHI KASEI KABUSHIKI KAISHA [JP] and YOKOHAMA NATIONAL UNIVERSITY [JP], filed 16/09/2016, describes an anode for water electrolysis comprising a porous nickel substrate and a thin film perovskite coating having a composition LnNiₓCo₍₁₋ₓ₎O₃, wherein Ln is a rare-earth element and 0 < x ≤ 1. The anodes exhibited low overpotentials towards the oxygen evolution reaction, but (as is also known to people skilled in the arts) adhesion between the perovskite coating and the nickel substrate was problematic. More specifically, in EP 3351659 A1 it was necessary to employ several additional processing steps to improve the adhesion between the perovskite coating and the substrate. First, the substrate was subjected to a surface treatment for providing irregularities before coating. A combination of sandblasting and chemical etching (with e.g. hydrochloric acid) are commonly employed for providing such irregularities. Secondly, a layer (also referred to as an "interlayer") of nickel oxide may be deposited between the nickel substrate and the perovskite film. The nickel oxide film should be as thick as possible (preferably 50 nm or more, more preferably 100 nm or more) to improve adhesion. Critically, nickel oxide is a very poor electric conductor, and thus too thick a nickel oxide layer will result in a drastic increase in the overpotential of the anode. According to EP 3351659 A1**,** the thickness of the nickel oxide layer is preferably 3000 nm or less, more preferably 5000 nm or less. Assuming an electric conductivity of nickel oxide of 1.3 × 10⁻⁵ S/cm and a nickel oxide layer thickness of 5000 nm, the resulting resistance penalty is 38.5 ohm cm², which in turn corresponds to an additional anode overpotential of 19.23 V at a current density of 5 kA/m². Overpotentials of well-performing anodes are typically well below 0.5 V, thus the above approach of using a 5000 nm nickel oxide interlayer is not commercially feasible. Even a 200 nm nickel oxide layer would increase anode overpotential by 0.77 V, and thus add a prohibitively large overpotential contribution to the electrolysis cell.

Yarong Wang et al., "Enhanced overall water electrolysis on a bifunctional perovskite oxide through interfacial engineering", Electrochimica Acta 318 (2019) 120-129, enhance the catalytic activity of La_{0.8}Sr_{0.2}Cr_{0.69}Ni_{0.31}O_{3-δ} (LSCN) by exsolution of discrete Ni₂P nanoparticles, induced by a partial reduction and subsequent phosphidization. LSCN was first partially reduced in a gas mixture of Ar and H₂ to promote exsolution of metallic Ni⁰ nanoparticles on the surface of the partially reduced LSCN (denoted as r-LSCN). Then, r-LSCN was exposed to a reducing atmosphere with phosphorus source to convert the Ni⁰ nanoparticles to Ni₂P nanoparticles (denoted as r-LSCN-P). Both the OER and HER activity of the perovskite oxide increased in the order r-LSCN < LSCN < r-LSCN-P, i.e. the activity of partially reduced LSCN was in both cases observed to be worse than the activity of the initial LSCN. According to Wang et al., both reduction and phosphidization steps are thus required in order to achieve a high activity perovskite oxide. The additional step of phosphidization was carried out in a tubular furnace in Ar/H₂ flow at 600°C by placing a porcelain boat filled with NaH₂PO₂ upstream of another porcelain boat filled with r-LSCN. Such a processing step is very difficult to carry out on an industrial scale and controlling the extent of phosphidization is challenging. It would thus be desirable to obtain highactivity perovskite oxides without the additional phosphidization step.

Therefore, there is still a need for identifying new technical solutions for how to improve the adhesion of perovskite oxides on nickel substrates without a performance penalty and preferably without additional processing steps.

### DISCLOSURE OF INVENTION

The inventor, having a desire to produce low-cost hydrogen via alkaline electrolysis using precious-metal free electrodes, has found that the approaches employed in anodes described in prior art still have significant drawbacks. More specifically, the anodes comprising a perovskite oxide coating on nickel substrates without an interlayer disposed in between the coating and the substrate are not mechanically stable. In particular, adhesion issues become apparent during temperature cycles, i.e. when the temperature of the electrolysis cell is increased from room temperature to operating temperature of approximately 80°C and decreased back to room temperature. Poor adhesion between layers may also become apparent when the electrolysis cell is operated under high current densities (e.g. above 5 kA/m²): adhesion between layers may be weakened due to the intensity at which oxygen bubbles are formed on the anodes. Furthermore, there is a need for anodes which are free of precious metals and are easy to fabricate.

The inventor has now surprisingly found out that it is possible to improve the adhesion between the perovskite coating and the nickel substrate without employing a resistive interlayer in between the coating and the substrate while simultaneously achieving high electrochemical activities towards the oxygen evolution reaction. More specifically, it has turned out that a desirable combination of strong adhesion and high electrochemical activity can be achieved, if the ceramic material is coated with nanoparticles which are socketed into the ceramic material. The socketing can be achieved for example by tailoring the chemical composition of the perovskite and by subsequently forming the nanoparticles via a process of exsolution. The socketed nanoparticles provide additional electrochemical activity towards the oxygen evolution reaction, while simultaneously providing anchoring points for improving adhesion between the perovskite and the nickel substrate.

Here, the term "perovskite" refers to a class of ceramic materials with a general crystallographic structure ABO₃, where A and B are metal ions and O is the oxide ion and where the ions are positioned in energetically distinct sites in the crystallographic lattice. The site in the lattice where A ion is positioned is referred to as the "A-site" and the site in the lattice where B ion is positioned is referred to as the "B-site". The oxygen content in the perovskite may vary depending on the choice of metal ions at the A- and B-site and depends also on factors such as temperature and oxygen partial pressure. Therefore, ABO_{3±δ} is a more accurate formula for the perovskite class, where δ is referred to as "oxygen non-stoichiometry" and is in the range of 0 ≤ δ ≤ 1. In formulas and equations of the present invention, "oxygen non-stochiometry" is meant to refer to the number of oxygen vacancies relative to the number of B-site cations in the ceramic material. For example, for La_{0.3}Sr_{0.7}TiO_{3.15} (equivalent to La_{0.3}Sr_{0.7}TiO_{3+0.15}), δ = 0.15. Note that any double perovskite A₂B₂O_{5+δ*} can be expressed as ABO_{3-δ} by acknowledging that δ* = 1-2δ. Oxygen non-stoichiometry is dependent on e.g., temperature, oxygen partial pressure, and applied voltage. Non-limiting examples of a ceramic materials with a perovskite-type structure comprising an oxide of at least one metal selected from among lanthanides including lanthanum, cerium and preseodymium include La_{0.5}Sr_{0.5}FeO_{3-δ}, La_{0.9}Ba_{0.1}NiO_{3-δ}, Ce_{0.6}Sr_{0.4}CoO_{3-δ} and Pr_{0.95}CoO_{3-δ}.

The term "A is socketed into B" is meant to refer to a situation where particles of A are partially submerged into the surface of B. The term "A is socketed into B" does not include situations where particles of A are merely deposited or coated onto the surface of B. Experimentally, it is possible to differentiate between socketed particles and deposited/coated particles by e.g., chemically etching away the particles of A using an etching agent such as HNO₃. In places where particles of A used to be socketed into B, pits are formed upon etching in material B, and the pits are of similar size and number as the particles of A. In contrast, when particles of A are coated onto the surface of material B, the removal of A does not lead to the formation of pits.

In the context of the present invention, the term "adhesion" is meant to refer to the ability of a pair of materials to bond to each other. Thereby, the term "strong adhesion" or the term "good adhesion" refers to a situation where the two materials bond strongly to each other, i.e. one material does not delaminate or detach from the other material. On macroscopic scale, the strength of adhesion can be quantitatively evaluated using dolly tests, such as the ones described in ASTM D4541-22. Qualitatively, the strength of adhesion can be evaluated using tape tests, such as the ones described in ASTM D3359. On microscopic scale, the strength of adhesion can be qualitatively evaluated by examining polished cross-sections of the interface between the two materials using an optical microscope or a scanning electron microscope: detection of delaminated or detached areas is a sign of weak adhesion. Finally, for electrolysis applications, adhesion between two electrode materials can be considered good or strong enough in case neither material detaches from the electrode during operation.

According to an aspect of the present invention an electrode is provided for carrying out the electrolysis of water from aqueous alkaline solutions, the electrode comprising a nickel metal substrate; a ceramic material with a perovskite-type structure comprising a lanthanide oxide, the said ceramic material forming a coating on the said metal substrate; and metal nanoparticles, wherein the said metal nanoparticles are socketed into the said ceramic material. In the context of the present invention, the terms "A forms a coating on B" or "a coating of A on B" are meant to refer to a situation where at least one side of component B is essentially covered with material A. Importantly, materials A and B do not necessarily have to be in physical contact with each other, i.e. materials A and B may be in some instances be separated by a third material. The third material can for example be nanoparticles socketed into material A, sandwiched between materials A and B.

The above embodiment of the invention is associated with several important advantages compared to state-of-the-art. Firstly, electrodes of the invention are characterized by high electrochemical activity, enabling low overpotentials, high efficiencies and thereby low hydrogen production costs. Secondly, the electrodes of the invention are mechanically stable, i.e. the perovskite coating adheres strongly to the nickel substrate. This has the advantage that the perovskite coating is not lost over time during electrolyzer operation, which otherwise would lead to loss of activity and furthermore result in the clogging of filters and/or the separator. Thirdly, the electrodes of the invention are free of precious metals such as iridium, platinum and ruthenium, which alleviates the issue related to the availability of electrode materials, as well as decreases electrode raw material costs considerably. Fourthly, the electrodes of the invention have lower overpotentials towards the oxygen evolution reaction than conventional nickel-based electrodes. Since electricity costs are a major factor determining the production costs of hydrogen produced by electrolysis, the electrodes of the invention thereby enable hydrogen to be produced at lower costs (OPEX- operational expenditure) than conventional nickel-based electrodes. Fifthly, the electrochemical activity and the strength of adhesion can be optimized by tuning the composition of the metals that are socketed into the ceramic material.

Socketed nanoparticles can be obtained using a number of different methods, commonly referred to as "exsolution". The term "exsolution" is meant to refer to the property of a subset of perovskite materials, wherein it is possible to change the solubility of at least one type of metal ion at the B-site of the perovskite lattice by varying external conditions. When the solubility of these metal ions is decreased, at least part of these B-site metals can no longer be dissolved in the perovskite and are therefore pushed out of the perovskite structure, leading to the formation of an additional phase on the surface of the perovskite. Chemically, exsolution can thus be expressed as:

A_{1-y}BO_{3-δ'} --> (1-y) ABO_{3-δ} + y B, (Eq 1)

where A_{1-y}BO_{3-δ'} is a precursor ceramic material and ABO_{3-δ} is a desired ceramic material and B are the exsolved nanoparticles.

Here, some of the metal ions at the B-site of the A_{1-y}BO_{3-δ} structure can no longer remain dissolved in the perovskite lattice and are exsolved as a separate phase denoted as B. A_{1-y}BO_{3-δ} refers to an A-site deficient perovskite, i.e. to a perovskite where the total number of A-site metals is lower than the total number of B-site metals. The parameter "y" is referred to as "A-site deficiency". For example, for a perovskite with an A-site deficiency of 0.05, equation 1 can be re-written as:

A_{0.95}BO_{3-δ'} --> 0.95 ABO_{3-δ} + 0.05 B. (Eq 2)

Therefore, the A-site deficiency does not only characterize the relative number of A-site to B-site metals, but also characterizes the amount of B that will be exsolved from the perovskite lattice. ABO_{3-δ} refers to a stoichiometric perovskite, i.e. to a perovskite where the ratio of A- to B-site metals is equal to 1. The oxygen non-stoichiometry in the said stoichiometric perovskite phase (δ) can differ from the oxygen non-stoichiometry of the original A-site deficient perovskite phase (δ').

Exsolution can be initiated by changing external conditions. These external conditions can refer to changes in temperature and/or the oxygen partial pressure of the atmosphere. For example, Neagu et al. (In situ growth of nanoparticles through control of non-stoichiometry, Nature Chemistry, doi: 10.1038/nchem.1773, published 06/10/2013) demonstrated that species such as Fe, Ni, Mn and Cu can be exsolved from the lattice of an A-site deficient doped lanthanum titanate upon exposure to reducing atmospheres and high temperatures. For example, Ni could be exsolved from the structure of La_{0.4}Sr_{0.4}Ni_{0.06}Ti_{0.94}O_{3-δ} by exposing the material to dry 5% H₂ in argon at 930 degrees Celsius for 20 hours.

Exsolution can also be initiated in other ways. For example, Myung et al. (Switching on electrochemical activity in solid oxide cells, Nature, doi: 10.1038/nature19090, published 22/08/2016) demonstrated that exsolution can also be triggered by applying an electric potential. For example, Ni could be exsolved from the structure of La_{0.43}Ca_{0.37}Ni_{0.06}Ti_{0.94}O_{3-δ} by applying a potential of 2 volts in a 50:50 mixture of H₂O and N₂ at 900 degrees Celsius. The materials were used as electrodes for solid oxide cells.

Furthermore, exsolution can also be initiated with the help of plasma. For example, Kyriakou et al. (Plasma Driven Exsolution for Nanoscale Functionalization of Perovskite Oxides, Small Methods, doi: 10.1002/smtd.20210868, published 22/10/2021) demonstrated that Ni could be exsolved from La_{0.43}Ca_{0.37}Ni_{0.06}Ti₉₄O_{3-δ} by exposing the material to a radio-frequency nitrogen or argon plasma at a temperature of 650 degrees Celsius.

Perovskites covered with exsolved nanoparticles have been used as electrodes in alkaline electrolysis. For example, Ma et al. (Exsolution manipulated local surface cobalt/iron alloying and dealloying conversion in La0.95Fe0.8Co0.2O3 perovskite for oxygen evolution reaction, Journal of Alloys and Compounds, doi: 10.1016/j.jallcom.2020.157154, published 11/09/2020) demonstrate that exsolution of Co or Co alloys from La_{0.95}Fe_{0.8}Co_{0.2}O₃ results in active catalysts for the OER. However, the electrochemical measurements were carried out on model electrodes which consisted of a perovskite, a conductive carbon filler, and a Nafion binder deposited onto a polished 5 mm diameter substrate. Such model electrodes are suitable for material characterization experiments, but not for industrial applications.

According to an aspect of the present invention, the socketed metal nanoparticles cover at least two faces of the ceramic material, with the metal nanoparticles facing the alkaline solution providing electrochemical activity, whereas the metal nanoparticles facing the said metal substrate providing anchoring points between the metal substrate and the said ceramic material. Hence, the socketed nanoparticles have a dual role: on the one hand to enhance the electrochemical activity of the electrode by providing additional surface area of a catalytically active metal; on the other hand to provide better adhesion between the metal substrate and the ceramic material with a perovskite-type structure.

In the context of the present invention, the term "anchoring point" is meant to refer to a local area on the order of 10 × 10 nm² to 100 × 100 nm² in size, where a socketed nanoparticle is in physical contact with, or has formed an alloy with the nickel metal substrate. Importantly, the anchoring point thus formed results in better adhesion between the nickel metal substrate and the ceramic material than in the case if nanoparticles are deposited onto the ceramic material by any other method known in the field, such as impregnation, spraying, chemical vapor deposition or other similar method. The reason for this improved adhesion is related to the fact that the socketed nanoparticles are partially submerged into the perovskite surface, which facilitates interdiffusion between the perovskite and the nanoparticle phases, which in turn has been shown to significantly improve adhesion between metal and oxide phases.

For example, Neagu et al. (Nano-socketed nickel particles with enhanced coking resistance grown in situ by redox exsolution, Nature Communications, doi: 10.1038/ncomms9120, published 11/09/2015) demonstrated that unlike nickel particles deposited on perovskite oxides, socketed nickel particles lead to enhanced stability and a significant propensity for avoiding coking, indicative of a stronger metal-oxide interface. Neagu *et al.* limited their work to gas-phase applications such as steam methane reforming and solid oxide cells.

In the context of the present invention, the term "electrochemical activity" is meant to refer to the activity of a material or an electrode towards catalyzing either the OER or the HER reaction in alkaline conditions. Electrochemical activity is typically characterized by measuring the overpotential or area-specific polarization resistance of a material or an electrode. Electrochemical activity can be measured using methods such as cyclic voltammetry or impedance spectroscopy.

In an embodiment of the present invention, the ceramic material comprises doped lanthanide titanate of the following formula: [LnₓA' ₍₁₋ₓ₎]_{1-y}B₂Ti_{(1-z)}O_{3±δ}, wherein Ln is a lanthanide, A' is a lanthanide or alkaline earth metal, x is in the range of 0.1 ≤ x < 1, y is A-site deficiency and is in the range of 0 ≤ y ≤ 0.05, B is a transition metal, Ti is titanium, z is in the range of 0.01 ≤ z ≤ 0.1, O is oxygen, and δ is oxygen non-stoichiometry and 0 ≤ δ ≤ 1. A-site deficient doped lanthanide titanates are interesting materials for use in alkaline electrolysis applications due to their desirable properties: their stability towards etching and structure change in alkaline conditions, their relatively high electrical conductivity, and their versatility in terms of the wide choice of transition metals that can be doped onto the B-site. Furthermore, A-site deficiency is desirable to ensure that all B-site ions are initially (i.e. before exsolution) strongly bound to the perovskite structure and in order to facilitate exsolution according to Eq. 1. It should be understood that in the context of the present invention, chemical elements (e.g., Ti) and the corresponding ions (e.g., Ti⁴⁺) are used interchangeably. A person skilled in the art can easily distinguish between the two in the correct context.

According to an aspect of the present invention, Ln is La (lanthanum), Ce (cerium), or praseodymium (Pr); A' is Ce (cerium), Sr (strontium), Ca (calcium), or Ba (barium); B is Ni (nickel), Fe (iron), Co (cobalt), Cr (chromium), Mn (manganese) or a combination thereof. The advantage of using La, Ce, or Pr as Ln is related to the combination of suitable cation size for La³⁺, Ce³⁺, and Pr³⁺ in the perovskite lattice, and the availability (price) of these elements. For example, Dy³⁺ and Eu³⁺ would also be suitable from ionic radius point of view but are too expensive for wide-scale use. An advantage of using Ce, Sr, Ca, or Ba as A' is that it generally increases the electrical conductivity, as well as oxygen vacancy concentration of the ceramic material. The advantages of using Ni, Fe, Co, Cr, or Mn as B are two-fold: first, the use of transition metals improves the electronic conductivity of the materials due to the many possible oxidation states of the metals, enabling for example the polaron hopping conduction mechanism. Secondly, the use of Ni, Fe, Co, Cr, or Mn as B over metals such as Ru or Ir as B or B' is advantageous due to the lower cost of Ni, Fe, Co, Cr, or Mn compared to Ru and Ir.

EP 3 444 383 B1, DE NORA PERMELEC LTD [JP], 20.02.2019, describes an anode for alkaline water electrolysis comprising a conductive substrate having at least a surface composed of nickel or a nickel-based alloy, and an electrode catalyst layer formed on the surface of the conductive substrate, wherein a catalyst component that constitutes the electrode catalyst layer comprises: a first catalyst component having a nickel-cobalt spinel oxide represented by a structural formula NiCo₂O₄, or a lanthanide-nickel-cobalt perovskite oxide represented by a structural formula XNiₐCo₁₋ₐO₃ (wherein X represents at least one metal selected from among lanthanides including lanthanum, cerium and praseodymium, and 0<a<1), and a second catalyst component having at least one of iridium oxide and ruthenium oxide, wherein an amount of the second catalyst component, calculated as an amount of a component metal, is at least 0.2 g/m². The electrode described in EP 3 444 383 B1 still contains significant amounts of iridium and ruthenium oxide to achieve required activity levels. However, iridium and ruthenium are very expensive and scarce, and it would be desirable to achieve high electrochemical activity without having to use precious metals as catalysts. During fabrication, the electrode is further subjected to a heat treatment at a temperature from 350°C to 550°C in an oxygen-containing atmosphere to form the desired oxides and to enhance the coating strength onto the electrode substrate and the adhesive strength between the catalyst layers. The aforementioned thermal treatment in oxygen-containing atmosphere is important to ensure that the separation of the catalyst component from the catalyst layer does not occur, the corrosion resistance improves, and to ensure the achievement of a low overpotential. Furthermore, neither the spinel nor the perovskite-based first catalyst reported herein is exsolvable.

In an embodiment according to the present invention, the nanoparticles comprise nickel or a nickel alloy. The use of nickel or alloys of nickel, such as Ni-Co, Ni-Fe, Ni-Mn, Ni-Cr, Ni-Co-Fe, etc. is advantageous for two reasons. First, Ni nanoparticles and nanoparticles of Ni alloys are well-known in the art to exhibit excellent electrochemical activity towards both HER and OER in alkaline conditions. Secondly, Ni nanoparticles and nanoparticles of Ni allows will interact strongly with the nickel metal substrate: upon physical contact, nanoparticles will try to lower their surface energy by dissolving (partially) into the nickel metal substrate. The fact that nanoparticles are socketed will lead to improved contact between the nanoparticles and the substrate and result in the formation of anchoring points. The use of Ni alloys is particularly advantageous, since it allows optimization of electrochemical activity versus adhesion simply by varying the composition of the alloy and the ratio of Ni to the other metal(s) in the alloy.

According to an aspect of the present invention, the chemical composition of the nanoparticles facing the alkaline solution and the composition of the nanoparticles facing the metal substrate are not identical. The use of different nanoparticles on each side of the coating comprising a ceramic material of a perovskite-type structure is advantageous, since it makes it possible to optimize the composition of the nanoparticles facing the alkaline solution towards maximizing the electrochemical activity, while simultaneously optimizing the composition of the nanoparticles facing the metal substrate towards best adhesion. The chemical composition of the nanoparticles can be determined by measurements combining energy-dispersive X-ray spectroscopy and electron microscopy. The difference in nanoparticle composition can be achieved e.g., by varying the composition of the ceramic material within the ceramic coating by layering, grading, gradual change in composition, or other methods known to persons skilled in the art. For example, the nanoparticles facing the metal substrate could comprise Ni, while the nanoparticles facing the alkaline solution could comprise Ni-Fe.

In an embodiment of the present invention, the thickness of the ceramic material coating on the surface of the substrate is in the range of 1 to 5 microns, and the number density of nanoparticles on the surface of the ceramic material is at least 50 nanoparticles per µm² but less than 250 nanoparticles per µm².

In the context of this invention, "coating thickness" refers to the average thickness of the coating, and can be estimated for example by electron microscopy measurements of the polished cross-section or fractured cross-section of the coating. If the thickness of the ceramic material coating is too low (e.g., below 1 microns), then the surface area of the ceramic material coating that is exposed to the electrolyte is low, and the rate of electrochemical reactions on the electrode is limited by the availability of the ceramic material surface area to catalyze the reactions. On the other hand, if the ceramic material coating is too thick (e.g., above 5 microns), then the rate of electrochemical reactions on the electrode becomes limited by the slow diffusion of reactants and reactions products through the coating layer. Furthermore, the electric conductivity of the ceramic coating is generally significantly lower than the electric conductivity of the nickel metal substrate, thus very thick ceramic coatings lead to undesired additional ohmic resistance of the electrolysis cell.

In the context of this invention, the term "number density of nanoparticles" refers to the average number of nanoparticles that can be detected per unit area of another material, characterized for example in units of (number of particles) per µm². The number density of nanoparticles can be determined by e.g. scanning electron microscopy measurements. Since the catalytic activity of the electrode is directly related to the exposed surface area of the nanoparticles, then the number density of nanoparticles on the surface of the ceramic materials should be high, e.g. at least 50 nanoparticles per µm² in order to ensure sufficient catalytic activity of the electrode. On the other hand, if the number density of nanoparticles is too high, e.g. over 250 nanoparticles per µm², then the particles are so close to each other that they start to excessively agglomerate, e.g. via the Ostwald ripening mechanism.

In an embodiment according to the present invention, the electrode is an anode. Ceramic material with a perovskite-type structure have been demonstrated to exhibit particularly high electrochemical activity towards the OER. However, some perovskite materials are also suitable for use as a cathode, i.e. for catalyzing the HER reaction.

In another embodiment according to the present invention, a method for fabricating the electrode is described, wherein the method comprises an exsolution step. In the exsolution step, a species (such as Ni) originally dissolved in a perovskite-type structure is exsolved, thereby forming socketed nanoparticles on the surface of the ceramic material.

According to an aspect of the present invention, the exsolution of metal nanoparticles in the exsolution step is achieved by at least one of the following ways: a) exposure to temperatures in the range of between 700 and 1100 degrees Celsius and reducing atmospheres, b) exposure to temperatures in the range of between 700 and 1100 degrees Celsius and radio-frequency plasma, or c) exposure to temperatures in the range of between 500 and 900 degrees Celsius and electric potential. The advantages of high electrochemical activity and strong adhesion of the ceramic coating to the metal substrate rely on successful exsolution of nanoparticles from the ceramic material. Exsolution can be triggered by a number of different ways, for example by exposing the ceramic material of the invention to a combination of high temperature and one of either reducing atmosphere, radio-frequency plasma, or strong electric potential. The temperature needs to be high enough for the exsolution kinetics to be fast, yet low enough so that the ceramic coating would not start to sinter or coarsen, and to avoid structural changes to the nickel substrate. In order for the exsolution to occur between the metal substrate and the said ceramic material, the surface of the ceramic material facing the metal substrate should be reachable by reducing gas atmosphere, the plasma, or the electric potential.

In yet another embodiment according to the present invention, the method comprises the following steps: 1) providing a nickel metal substrate, 2) an impregnation step, wherein a base ceramic material is deposited onto the surface of the nickel metal substrate by impregnation, 3) a subsequent drying step at a drying temperature in the range of 50 to 150 degrees Celsius, 4) a subsequent calcination step at a calcination temperature in the range of 450 to 550 degrees Celsius, thereby forming the precursor ceramic material, 5) the exsolution step, wherein the precursor ceramic material comprises an A-site deficient doped lanthanide titanate, and y is in the range of 0.05 ≤ y ≤ 0.2.

In the context of the present invention, the term "impregnation" is meant to refer to a process wherein a base ceramic material, i.e., a soluble, molten or liquid species that contains metal ions in the same atomic ratio as in the desired ceramic material, is impregnated, i.e., wet-coated into the pores and onto the surface of another material. Upon calcination, the base material decompose into the precursor ceramic material. For example, for the preparation of [LaₓSr₍₁₋ₓ₎]_{1-y}TiO_{3±δ}, an aqueous solution of La(NO₃)₃ · 6 H₂O, Sr(NO₃)₂ and [CH₃CH(O-)CO₂·NH₄]₂·Ti(OH)₂ (dihydroxy-bis-ammonium, lactate, titanium (IV)) can be used, where the atomic ratio of La³⁺, Sr²⁺ and Ti⁴⁺ in the solution has to match the atomic ratio of these ions in the desired ceramic material with a perovskite-type structure. The base material solution often commonly includes a complexing agent, such as citric acid, glycine, saccharose or similar. The advantage of using impregnation is that it allows the ceramic coating to cover the substrate surface in a uniform manner, including the inner surface of any open pores that may be present in the substrate. The impregnation step is followed by a drying step, which has to be carried out under controlled conditions in order to ensure that the distribution of solution remains uniform over the entire substrate surface. In case impregnation is carried out into a porous substrate, the drying step needs to ensure that there is no crust or skin formation on the outer surface of the porous substrate that might otherwise hinder the penetration of solution into the pores of the substrate. The role of the subsequent calcination step is to decompose the base material into corresponding oxides while ensuring that the underlying nickel metal substrate remains at least partially reduced. The upper temperature limit of the calcination step, if carried out in air or other oxidizing atmosphere, is determined by the oxidation rate of the nickel metal substrate. In a preferred embodiment of the invention, the nickel metal substrate does not oxidize upon the calcination step. The exsolution step, as described above, is commonly carried out after the calcination step. It is particularly advantageous that the calcined ceramic material comprises an A-site deficient perovskite due to their propensity to facilitate exsolution according to Eq. 1. After exsolution, the resulting ceramic material will be less A-site deficient than the calcined ceramic material, and may under some conditions be stoichiometric, i.e., not A-site deficient.

In an embodiment according to the present invention, the method comprises the following steps: 1) providing a nickel metal substrate, 2) a synthesis step, wherein a precursor ceramic material with an A-site deficient perovskite-type structure (A_{1-y}BO_{3-δ'}) is obtained, y is in the range of 0.05 ≤ y ≤ 0.2, 3) a coating step, wherein the precursor material is deposited onto the surface of the nickel metal substrate, 4) a subsequent optional drying step at a drying temperature in the range of 50 to 150 degrees Celsius, and 5) a subsequent optional calcination step at a calcination temperature in the range of 450 to 550 degrees Celsius, and 6) the exsolution step, thereby forming the ceramic material ABO_{3-δ} and the nanoparticles B. The "coating step" differs from the "impregnation" step in that in this particular embodiment, the precursor ceramic material is not formed after deposition onto the substrate (as is the case for impregnation), but in a separate step before deposition onto the substrate. The precursor ceramic material is obtained in the synthesis step, and suitable synthesis methods include but are not limited to sol-gel synthesis, solid state synthesis, coprecipitation, spray pyrolysis, and hydrothermal synthesis. In some cases, the synthesis step may include additional treatment, such as thermal treatments, particle size modifications, filtering, and so on. The ceramic material can be coated onto the nickel metal substrate using methods which include but are not limited to tape casting, dip coating, electrophoresis, wet spray coating, plasma spraying, cold spraying, painting, and electrodeposition. The coating step is followed by an optional drying step, where the solvent (if present) is removed from the coating, which is in turn followed by an optional calcination step. The role of the calcination step is to burn out the organic additives which are present in the as-deposited coatings produced by e.g. spraying, tape-casting and dip coating, while ensuring that the underlying nickel metal substrate remains at least partially reduced. No calcination step is required if methods such as plasma spraying is used for coating. The exsolution step, as described above, is commonly carried out as the last step in the procedure. After exsolution, the resulting ceramic material ABO_{3-δ} will be less A-site deficient than the calcined ceramic material A_{1-y}BO_{3-δ'}. The resulting ceramic material may under some conditions be stoichiometric, i.e., not A-site deficient.

According to an aspect of the present invention, an alkaline electrolysis stack comprises at least one electrode which in turn comprises a nickel metal substrate; a ceramic material with a perovskite-type structure comprising a lanthanide oxide, the said ceramic material forming a coating on the said metal substrate; and metal nanoparticles, wherein the said metal nanoparticles are socketed into the said ceramic material. The term "alkaline electrolysis stack" is meant to refer to a device comprising more than one alkaline electrolysis cell connected electrically in series. The higher the number of cells in the stack, the more hydrogen and oxygen can be produced in unit time for a stack operating at a given current density. Similarly, the larger the surface area (footprint) of each cell in the stack, the more hydrogen and oxygen can be produced for a stack operating at a given current density.

In yet another embodiment of the present invention, the stack is used for the electrolysis of water in alkaline conditions.

### BRIEF DESCRIPTION OF DRAWINGS

FIG. 1 is a schematic of an electrode according to one embodiment of the invention.
FIG. 2 is a schematic of an electrode according to another embodiment of the invention.
FIG. 3 is a schematic of an electrode according to yet another embodiment of the invention.
FIG. 4 is a description of a method for fabricating the electrode according to an embodiment of the invention.
FIG. 5 is a description of a method for fabricating the electrode according to another embodiment of the invention.

### DETAILED DESCRIPTION OF DRAWINGS

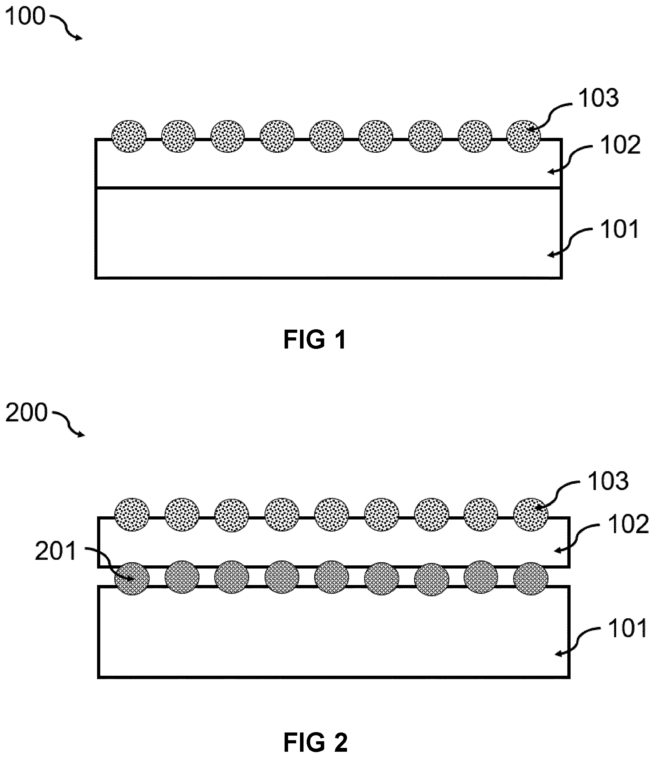

FIG. 1 depicts an electrode (100) according to the invention. The electrode comprises a nickel metal substrate (101), a coating of a ceramic material with a perovskite-type structure (102), and metal nanoparticles (103), the nanoparticles socketed into the ceramic material (102).

FIG. 2 depicts an electrode (200) according to another embodiment of the invention. The electrode comprises a nickel metal substrate (101), a coating of a ceramic material with a perovskite-type structure (102), and nanoparticles (103) facing the alkaline solution, and the nanoparticles (201) facing the metal substrate (101). Metal nanoparticles (103) facing the alkaline solution provide electrochemical activity, while the nanoparticles (201) provide adhesion between the metal substrate (101) and the ceramic coating (102). Nanoparticles (103, 201) are socketed into the ceramic material (102). The chemical composition of nanoparticles (103) facing the alkaline solution and the chemical composition of nanoparticles (201) facing the metal substrate may or may not be identical.

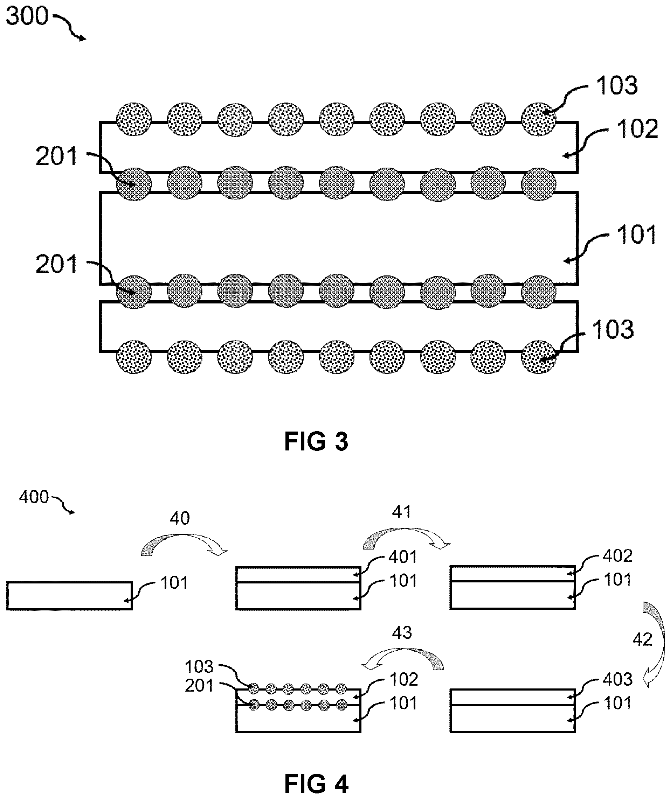

FIG. 3 depicts an electrode (300) according to yet another embodiment of the present invention. The two-sided electrode comprises a nickel metal substrate (101), a coating of a ceramic material with a perovskite-type structure (102), and nanoparticles (103) facing the alkaline solution, and the nanoparticles (201) facing the metal substrate (101). Nanoparticles (103, 201) are socketed into the ceramic material (102).

FIG. 4 shows a method (400) for fabricating the electrode according to an embodiment of the invention. Liquid base material (401) is deposited onto the surface of the nickel metal substrate (101) by impregnation (40). Subsequently, the liquid base material (401) is converted into dried base material (402) as a result of the drying step (41). Subsequently, the dried base material (402) is converted into precursor ceramic material (403) as a result of the calcination step (42). The calcined precursor ceramic material has a perovskite-type structure and is A-site deficient, i.e. can be described with the formula A_{1-y}BO_{3-δ'}. Subsequently, the precursor ceramic material (403) is converted into the ceramic material (102) that is coated with nanoparticles (103, 201) as a result of the exsolution step (43). The resulting ceramic material (102) is less A-site deficient than the calcined precursor ceramic material (403).

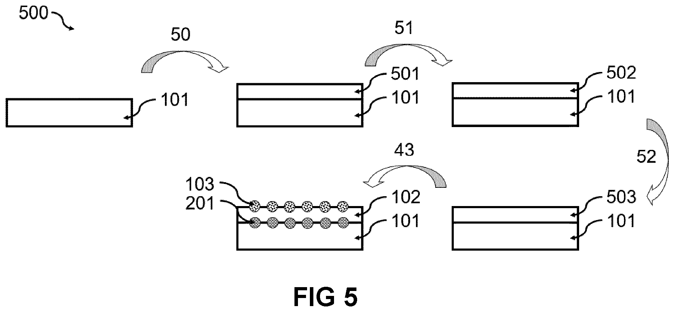

FIG. 5 shows a method (500) for fabricating the electrode according to another embodiment of the invention. A coating of synthesized precursor ceramic material (501) is deposited onto the surface of the nickel metal substrate (101) as a result of a coating step (50). The synthesized ceramic material has a perovskite-type structure and is A-site deficient, i.e. can be described with the formula A_{1-y}BO_{3-δ'}. Subsequently, the coating of the synthesized precursor ceramic material (501) is converted into a dried coating of the precursor ceramic material (502) as a result of the drying step (51). Subsequently, the dried coating of the precursor ceramic material (502) is converted into calcined precursor ceramic material (503) as a result of the calcination step (52). Subsequently, as a result of the exsolution step (43), the calcined precursor ceramic material (403) is converted into the ceramic material (102) with socketed nanoparticles (103, 201). The resulting ceramic material (102) is less A-site deficient than the calcined precursor ceramic material (503).

### BEST MODE(S) FOR CARRYING OUT THE INVENTION

The method is illustrated in more detail in the non-limiting examples that follow.

### EXAMPLES

### Example 1 (comparative example)

In Table 1, a selection of ceramic materials from the lanthanum strontium titanate family are listed. The listed materials are not A-site deficient (y = 0) and thus, exsolution according to Eq. 1 cannot proceed. When such materials are subjected to exsolution conditions, e.g. a combination of high temperature and reducing atmosphere, a combination of high temperature and electric potential, or a combination of high temperature and radio-frequency Ar or N₂ plasma, the exsolution of nanoparticles is not achieved.

For example, (La_{0.3}Sr_{0.7})_{1.0}Ti_{0.94}Ni_{0.06}O_{3.09} is a perovskite-type material, Ln = La, A' = Sr, x = 0.3, y = 0, B = Ni, z = 0.06, and δ' = (x/2+(m-n)*z/2 = 0.09, where Ti^{m+} (Ti⁴⁺, m = 4) and Niⁿ⁺ (Ni²⁺, n = 2). Exsolution of Ni nanoparticles from (La_{0.3}Sr_{0.7})_{1.0}Ti_{0.94}Ni_{0.06}O_{3.09} is hindered by the A-site stoichiometry (i.e., no A-site deficiency).

In (La_{0.5}Sr_{0.5})_{1.0}Ti_{0.94}Ni_{0.06}O_{3.19}, another perovskite-type material, Ln = La, A' = Sr, x = 0.5, y = 0, B = Ni, z = 0.06, and δ' = 0.19, exsolution of Ni nanoparticles is similarly hindered by the A-site stoichiometry. Furthermore, the high value of δ' makes the structure prone to the formation of rutile intergrowths in the nominally perovskite-type structure, which is undesirable.

In (La_{0.3}Sr_{0.7})_{1.0}Ti_{0.88}Ni_{0.12}O_{3.03}, another perovskite-type material, Ln = La, A' = Sr, x = 0.3, y = 0, B = Ni, z = 0.12, and δ' = 0.03, exsolution of Ni nanoparticles is similarly hindered by the A-site stoichiometry. Furthermore, the high value of z (z ≥ 0.1) makes it difficult to dissolve all of the Ni species in the perovskite lattice during synthesis. Rather than being incorporated into the perovskite structure upon calcination, some of the Ni is likely to form an additional nickel oxide phase. Upon exposure to exsolution conditions, this additional nickel oxide phase does not form socketed nanoparticles, which is undesirable.

In (La_{0.}3Sr_{0.7})_{1.1}Ti_{0.94}Ni_{0.06}O_{3.105}, another perovskite-type material, Ln = La, A' = Sr, x = 0.3, y = -0.1, B = Ni, z = 0.06, and δ' = 0.105, exsolution of Ni nanoparticles is hindered by the A-site excess. Formation of additional intergrowth phases, such as the rutile phase, is likely. Exsolution via Eq. 1 cannot proceed.

**Table 1**

| **Ceramic material before exsolution** | **y** | **δ** |
|---|---|---|
| (La_{0.3}Sr_{0.}7)_{1.0}Ti_{0.94}Ni_{0.06}O_{3.09} | 0 | 0.09 |
| (La_{0.5}Sr_{0.5})_{1.0}Ti_{0.94}Ni_{0.06}O_{3.19} | 0 | 0.19 |
| (La_{0.3}Sr_{0.7})_{1.0}Ti_{0.88}Ni_{0.12}O_{3.03} | 0 | 0.03 |
| (La_{0.3}Sr_{0.7})_{1.1}Ti_{0.94}Ni_{0.06}O_{3.105} | 0 | 0.105 |

### Example 2

In Table 2, a selection of ceramic materials from the lanthanide strontium titanate family are listed. The listed materials are A-site deficient and 0.05 ≤ y ≤ 0.2. Thus, exsolution according to Eq. 1 is possible.

For example, (La_{0.5}Sr_{0.5})_{0.8}Ti_{0.97}Ni_{0.03}O_{2.97} is a perovskite-type material, Ln = La, A' = Sr, x = 0.5, y = 0.8, B = Ni, z = 0.03, and δ' = -(m-n)*z/2 = -0.03, where Ti^{m+} (Ti⁴⁺, m = 4) and Niⁿ⁺ (Ni²⁺, n = 2). Exsolution of Ni nanoparticles from (La_{0.5}Sr_{0.5})_{0.8}Ti_{0.97}Ni_{0.03}O_{2.97} can be achieved by exposing the initial ceramic material to e.g. 5% H₂ in Ar for 20 hours at 930 degrees Celsius. Upon complete exsolution, the chemical composition of the ceramic material is (La_{0.5}Sr_{0.5})_{0.83}TiO_{3-δ}. (La_{0.5}Sr_{0.5})_{0.8}Ti_{0.94}Ni_{0.06}O_{2.94}, (Pr_{0.5}Sr_{0.5})_{0.8}Ti_{0.94}Ni_{0.06}O_{2.94}, and (Ce_{0.5}Sr_{0.5})_{0.8}Ti_{0.94}Ni_{0.06}O_{2.94} are perovskite-type materials, Ln = La, Pr, or Ce, respectively. Furthermore, A' = Sr, x = 0.5, y = 0.8, B = Ni, z = 0.06, and δ' = -(m-n)*z/2 = -0.06. Exsolution of Ni nanoparticles from (La_{0.5}Sr_{0.5})_{0.8}Ti_{0.94}Ni_{0.06}O_{2.94} can be achieved by exposing the initial ceramic material to e.g. 5% H₂ in Ar for 20 hours at 930 degrees Celsius. Upon complete exsolution, the chemical composition of the ceramic material is (La_{0.5}Sr_{0.5})_{0.86}TiO_{3-δ}.

**Table 2**

| **Ceramic material before exsolution** | **y** | **δ'** | **Ceramic material upon complete exsolution** | **y** | **Nanoparticles** |
|---|---|---|---|---|---|
| (La_{0.5}Sr_{0.5})_{0.8}Ti_{0.97}Ni_{0.03}O_{2.97} | 0.2 | -0.03 | (La_{0.5}Sr_{0.5})_{0.83}TiO_{3-δ} | 0.17 | Ni |
| (La_{0.5}Sr_{0.5})_{0.8}Ti_{0.94}Ni_{0.06}O_{2.94} | 0.2 | -0.06 | (La_{0.5}Sr_{0.5})_{0.86}TiO_{3-δ} | 0.14 | Ni |
| (Pr_{0.5}Sr_{0.5})_{0.8}Ti_{0.94}Ni_{0.06}O_{2.94} | 0.2 | -0.06 | (Pr_{0.5}Sr_{0.5})_{0.86}TiO_{3-δ} | 0.14 | Ni |
| (Ce_{0.5}Sr_{0.5})_{0.8}Ti_{0.94}Ni_{0.06}O_{2.94} | 0.2 | -0.06 | (Ce_{0.5}Sr_{0.5})_{0.86}TiO_{3-δ} | 0.14 | Ni |

### Example 3

In Table 3, a selection of ceramic materials from the lanthanum strontium titanate family with multiple transition metals doped into the B-site are listed. The listed materials are A-site deficient and 0.05 ≤ y ≤ 0.2. Thus, exsolution according to Eq. 1 is possible.

For example, (La_{0.5}Sr_{0.5})_{0.8}Ti_{0.9}Ni_{0.075}Fe_{0.025}O_{2.902} is a perovskite-type material, Ln = La, A' = Sr, x = 0.5, y = 0.8, B = Ni, z = 0.075, B' = Fe, z' = 0.025, and δ' is -0.088. Exsolution of Ni-Fe alloy nanoparticles from (La_{0.5}Sr_{0.5})_{0.8}Ti_{0.9}Ni_{0.075}Fe_{0.025}O_{2.902} can be achieved by exposing the initial ceramic material to e.g. 10% H₂ in Ar for 10 hours at 900 degrees Celsius. Upon complete exsolution, the chemical composition of the ceramic material is (La_{0.5}Sr_{0.5})_{0.9}TiO_{3-δ}.

For example, (La_{0.5}Sr_{0.5})_{0.8}Ti_{0.9}Ni_{0.05}Co_{0.05}O_{2.925} is a perovskite-type material, Ln = La, A' = Sr, x = 0.5, y = 0.8, B = Ni, z = 0.05, B' = Co, z' = 0.05, and δ' is -0.075. Exsolution of Ni-Co alloy nanoparticles from (La_{0.5}Sr_{0.5})_{0.8}Ti_{0.9}Ni_{0.05}Co_{0.05}O_{2.925} can be achieved by exposing the initial ceramic material to e.g. 10% H₂ in Ar for 10 hours at 900 degrees Celsius. Upon complete exsolution, the chemical composition of the ceramic material is (La_{0.5}Sr_{0.5})_{0.9}TiO_{3-δ}.

**Table 3**

| **Ceramic material before exsolution** | **y** | **δ'** | **Ceramic material upon complete exsolution** | **y** | **Nanoparticles** |
|---|---|---|---|---|---|
| (La_{0.5}Sr_{0.5})_{0.8}Ti_{0.9}Ni_{0.075}Fe_{0.025}O_{2.902} | 0.2 | -0.088 | (La_{0.5}Sr_{0.5})_{0.9}TiO_{3-δ} | 0.1 | Ni-Fe alloy |
| (La_{0.5}Sr_{0.5})_{0.8}Ti_{0.9}Ni_{0.05}Co_{0.05}O_{2.925} | 0.2 | -0.075 | (La_{0.5}Sr_{0.5})_{0.9}TiO_{3-δ} | 0.1 | Ni-Co alloy |

## Claims

1. An electrode (100, 200) suitable for carrying out the electrolysis of water from aqueous alkaline solutions, the electrode comprising:
a. a nickel metal substrate, (101),
b. a ceramic material with a perovskite-type structure (102) comprising an oxide of at least one metal selected from among lanthanides including lanthanum, cerium and praseodymium, the said ceramic material forming a coating on the said metal substrate,
c. metal nanoparticles (103, 201),
wherein the said metal nanoparticles (103, 201) are socketed into the said ceramic material (102) and are formed via an exsolution process.

2. The electrode according to claim 1, wherein the metal nanoparticles (103) facing the alkaline solution provide electrochemical activity, whereas the metal nanoparticles (201) facing the said metal substrate (101) provide anchoring points between the metal substrate (101) and the said ceramic material (102).

3. The electrode according to claims 1 or 2, the ceramic material is obtained via the exsolution from a precursor ceramic material, wherein the said precursor ceramic material comprises an A-site deficient perovskite (A_{1-y}BO_{3-δ'}), y is in the range of 0.05 ≤ y ≤ 0.2,and δ' is oxygen non-stoichiometry of the said precursor ceramic material and 0 ≤ δ' ≤ 1, wherein the said precursor ceramic material exhibits a change in solubility of at least one type of metal ion at the B-site during exsolution process.

4. The electrode according to claims 1, 2 or 3, wherein the ceramic material comprises doped lanthanide titanate of the following formula:
[LnₓA' ₍₁₋ₓ₎]_{1-y}B_{z}Ti_{(1-z)}O_{3±δ},
wherein
Ln is a lanthanide,
A' is a lanthanide or alkaline earth metal,
X is in the range of 0.1 ≤ x < 1,
y is A-site deficiency and is in the range of 0 ≤ y ≤ 0.05,
B is a transition metal,
Ti is titanium,
z is in the range of 0.01 ≤ z ≤ 0.1,
O is oxygen, and
δ is oxygen non-stoichiometry of the said ceramic material and 0 ≤ δ ≤ 1.

5. The electrode according to claim 4, wherein Ln is La (lanthanum), Ce (cerium), or praseodymium (Pr); A' is Ce (cerium), Sr (strontium), Ca (calcium), or Ba (barium); B is Ni (nickel), Fe (iron), Co (cobalt), Cr (chromium), Mn (manganese) or a combination thereof.

6. The electrode according to any of the preceding claims, wherein the nanoparticles comprise nickel or a nickel alloy.

7. The electrode according to claim 6, wherein the chemical composition of the nanoparticles facing the alkaline solution and the composition of the nanoparticles facing the metal substrate are not identical.

8. The electrode according to any of the preceding claims, wherein the thickness of the ceramic material coating on the surface of the substrate is in the range of 1 to 5 microns, and the number density of nanoparticles on the surface of the ceramic material is at least 50 nanoparticles per µm² but less than 250 nanoparticles per µm².

9. The electrode according to any of the preceding claims, wherein the electrode is an anode.

10. A method for fabricating the electrode according to any of the preceding claims, the method comprising an exsolution process step.

11. The method according to claim 10, wherein the exsolution of metal nanoparticles from the precursor ceramic material in the exsolution step is achieved by at least one of the following ways:
a. exposure to temperatures in the range of between 700 and 1100 degrees Celsius and reducing atmospheres,
b. exposure to temperatures in the range of between 700 and 1100 degrees Celsius and radio-frequency plasma,
c. exposure to temperatures in the range of between 500 and 900 degrees Celsius and electric potential.

12. The method according to claim 11, the method comprising the following steps:
1) Providing a nickel metal substrate, (101),
2) An impregnation step, wherein a base ceramic material is deposited onto the surface of the nickel metal substrate by impregnation,
3) A subsequent drying step at a drying temperature in the range of 50 to 150 degrees Celsius,
4) A subsequent calcination step at a calcination temperature in the range of 450 to 550 degrees Celsius, thereby forming the precursor ceramic material, (102),
5) The exsolution step,
wherein the precursor ceramic material comprises an A-site deficient doped lanthanide titanate, and y is in the range of 0.05 ≤ y ≤ 0.2.

13. The method according to claim 11, the method comprising the following steps:
1) Providing a nickel metal substrate,
2) A synthesis step, wherein a precursor ceramic material with an A-site deficient perovskite-type structure (A_{1-y}BO_{3-δ'}) is obtained, y is in the range of 0.05 ≤ y ≤ 0.2,
3) A coating step, wherein the precursor ceramic A_{1-y}BO_{3-δ'} material is deposited onto the surface of the nickel metal substrate,
4) A subsequent optional drying step at a drying temperature in the range of 50 to 150 degrees Celsius,
5) A subsequent optional calcination step at a calcination temperature in the range of 450 to 550 degrees Celsius
6) The exsolution step.

14. An alkaline electrolysis stack comprising at least one electrode according to any of the preceding claims.

15. A method for the electrolysis of water in alkaline conditions using the alkaline electrolysis stack according to claim 14.

## Patentansprüche

1. Eine Elektrode (100, 200), geeignet zur Durchführung einer Wasserelektrolyse in wasserhaltiger alkalischer Lösung, wobei die Elektrode aus folgenden Bestandteilen besteht:
a. einem Nickel-Metallsubstrat, (101),
b. einem keramischen Material mit einer Perowskitstruktur (102) mit einem Oxid aus mindestens einem Metall, ausgewählt aus Lanthaniden, einschließlich Lanthan, Cerium und Praseodym, wobei das keramische Material eine Beschichtung auf dem Metallsubstrat bildet,
c. Metallnanopartikeln (103, 201),
wobei die Metallnanopartikel (103, 201) mit dem keramischen Material verbunden sind (102) und über einen Entmischungsvorgang ausgebildet werden.

2. Eine Elektrode gemäß Anspruch 1, wobei die Metallnanopartikel (103), die der alkalischen Lösung zugewandt sind, elektrochemische Aktivität auslösen, wobei die Metallnanopartikel (201), die dem Metallsubstrat (101) zugewandt sind, Ankerpunkte zwischen dem Metallsubstrat (101) und dem genannten keramischen Material (102) aufweisen.

3. Eine Elektrode gemäß Ansprüche 1 oder 2, wobei das keramische Material über die Entmischung aus einem keramischen Vorstufenmaterial erhalten wird, wobei das keramische Vorstufenmaterial aus einem A-seitig fehlerhaften Perowskit (A_{1-y}BO_{3-δ'}) besteht, y im Bereich 0,05 ≤ y ≤ 0,2 liegt, δ' nichtstöchiometrischer Sauerstoff des genannten keramischen Vorstufenmaterials ist und 0 ≤ δ' ≤ 1 gilt, wobei das keramische Vorstufenmaterial eine Änderung in der Löslichkeit mindestens einer Metallionenart an der B-Seite während des Entmischungsvorgangs aufweist.

4. Eine Elektrode gemäß Ansprüche 1, 2 oder 3, wobei das keramische Material aus dotiertem Lanthanidentitanat mit der folgenden Formel besteht:
[LnₓA' ₍₁₋ₓ₎]_{1-y}B_{z}Ti_{(1-z)}O_{3±δ},
wobei
Ln ein Lanthanid ist,
A' ein Lanthanid oder alkalisches Erdmetall ist,
X im Bereich 0,1 ≤ x < 1 liegt,
y der A-seitige Fehler ist und im Bereich 0 ≤ y ≤ 0,05 liegt,
B ein Übergangsmetall ist,
Ti Titanium ist,
z im Bereich 0,01 ≤ z ≤ 0,1 liegt,
O Sauerstoff ist, und
δ nichtstöchiometrischer Sauerstoff des keramischen Materials ist und 0 ≤ δ ≤ 1 gilt.

5. Eine Elektrode gemäß Anspruch 4, wobei Ln La (Lanthan), Ce (Cerium) oder Praseodym (Pr) ist; A' Ce (Cerium), Sr (Strontium), Ca (Calcium) oder Ba (Barium) ist; B Ni (Nickel), Fe (Eisen), Co (Cobalt), Cr (Chrom), Mn (Mangan) oder eine Kombination daraus ist.

6. Eine Elektrode gemäß einem der vorherigen Ansprüche, wobei die Nanopartikel Nickel oder Nickellegierung umfassen.

7. Eine Elektrode gemäß Anspruch 6, wobei die chemische Zusammensetzung der Nanopartikel, die der alkalischen Lösung zugewandt sind, und die Struktur der Nanopartikel, die dem Metallsubstrat zugewandt sind, nicht identisch sind.

8. Eine Elektrode gemäß einem der vorherigen Ansprüche, wobei die Dicke der keramischen Metallbeschichtung auf der Oberfläche des Substrates im Bereich 1 bis 5 Mikronen liegt, und die Dichtezahl der Nanopartikel auf der Oberfläche des keramischen Materials mindestens 50 Nanopartikel per µm² aber weniger als 250 Nanopartikel pro µm² beträgt.

9. Eine Elektrode gemäß einem der vorherigen Ansprüche, wobei die Elektrode eine Anode darstellt.

10. Ein Verfahren zur Herstellung einer Elektrode gemäß einem der vorherigen Ansprüche, wobei das Verfahren einen Entmischungsschritt umfasst.

11. Ein Verfahren gemäß Anspruch 10, wobei die Entmischung der Metallnanopartikel aus dem keramischen Vorstufenmaterial im Entmischungsschritt durch mindestens einen der folgenden Wege erreicht wird:
a. Aussetzung gegenüber Temperaturen im Bereich zwischen 700 und 1100 Grad Celsius und reduzierter Atmosphäre,
b. Aussetzung gegenüber Temperaturen im Bereich zwischen 700 und 1100 Grad Celsius und Hochfrequenzplasma,
c. Aussetzung gegenüber Temperaturen im Bereich zwischen 500 und 900 Grad Celsius und elektrischem Potenzial.

12. Ein Verfahren gemäß Anspruch 11, wobei das Verfahren die folgenden Schritte umfasst:
1) Bereitstellung eines Nickel-Metallsubstrates, (101),
2) ein Imprägnierungsschritt, wobei ein basisches keramisches Material durch Imprägnierung auf die Oberfläche des Nickel-Metallsubstrates aufgetragen wird,
3) ein nachfolgender Trocknungsschritt bei einer Trocknungstemperatur im Bereich von 50 bis 150 Grad Celsius,
4) einem nachfolgenden Brennschritt bei einer Brenntemperatur im Bereich von 450 bis 550 Grad Celsius, wobei daraus das keramische Vorstufenmaterial geformt wird, (102),
5) dem Entmischungsvorgang,
wobei das keramische Vorstufenmaterial aus einem A-seitig fehlerhaften, dotierten Lanthanidtitanat besteht und y im Bereich 0,05 ≤ y ≤ 0,2 liegt.

13. Ein Verfahren gemäß Anspruch 11, wobei das Verfahren die folgenden Schritte umfasst:
1) Bereitstellung eines Nickel-Metallsubstrates,
2) einem Syntheseschritt, wobei ein keramisches Vorstufenmaterial mit einer A-seitig fehlerhaften Perowskitstruktur (A_{1-y}BO_{3-δ'}) erlangt wird und y im Bereich 0,05 ≤ y ≤ 0,2 liegt,
3) einem Beschichtungsschritt, wobei das keramische A_{1-y}BO_{3-δ'} Vorstufenmaterial auf die Oberfläche des Nickel-Metallsubstrates aufgetragen wird,
4) einem nachfolgenden optionalen Trocknungsschritt bei einer Trocknungstemperatur im Bereich von 50 bis 150 Grad Celsius,
5) einem nachfolgenden optionalen Kalzinierungsschritt bei einer Kalzinierungstemperatur im Bereich von 450 bis 550 Grad Celsius,
6) einem Entmischungsvorgang.

14. Ein alkalischer Elektrolyse-Stack bestehend aus mindestens einer Elektrode gemäß einem der vorangegangenen Ansprüche.

15. Ein Verfahren zur Wasserelektrolyse unter alkalischen Bedingungen mittels alkalischem Elektrolyse-Stack gemäß Anspruch 14.

## Revendications

1. Electrode (100, 200) apte à réaliser l'électrolyse de l'eau à partir de solutions aqueuses alcalines, l'électrode comprenant:
a. un substrat métallique en nickel, (101),
b. un matériau céramique à structure de type pérovskite (102) comprenant un oxyde d'au moins un métal choisi parmi les lanthanides dont le lanthane, le cérium et le praséodyme, ledit matériau céramique formant un revêtement sur ledit substrat métallique,
c. nanoparticules métalliques (103, 201),
dans lequel lesdites nanoparticules métalliques (103, 201) sont insérées dans ledit matériau céramique (102) et sont formées par un processus d'exsolution.

2. L'électrode selon la revendication 1, dans laquelle les nanoparticules métalliques (103) orientées vers la solution alcaline fournissent une activité électrochimique, tandis que les nanoparticules métalliques (201) orientées vers ledit substrat métallique (101) fournissent des points d'ancrage entre le substrat métallique (101) et ledit matériau céramique (102).

3. L'électrode selon les revendications 1 ou 2, le matériau céramique est obtenu via l'exsolution d'un matériau céramique précurseur, dans lequel ledit matériau céramique précurseur comprend une pérovskite déficiente en site A (A1-yBO3-δ'), y est dans la plage de 0. 05 ≤ y ≤ 0,2, et δ' est la non-stœchiométrie de l'oxygène dudit matériau céramique précurseur et 0 ≤ δ' ≤ 1, dans lequel ledit matériau céramique précurseur présente un changement de solubilité d'au moins un type d'ion métallique sur le site B au cours du processus d'exsolution..

4. L'électrode selon les revendications 1, 2 ou 3, dans laquelle le matériau céramique comprend du titanate de lanthanide dopé de la formule suivante:
[LnxA'(1-x)]1-yBzTi(1-z)O3±δ,
où
Ln est un lanthanide,
A' est un lanthanide ou un métal alcalino-terreux,
X est compris entre 0,1 ≤ x < 1,
y est la déficience du site A et se situe dans la plage de 0 ≤ y ≤ 0,05,
B est un métal de transition,
Ti est le titane,
z est compris entre 0,01 ≤ z ≤ 0,1,
O est l'oxygène, et
δ est la non-stœchiométrie en oxygène dudit matériau céramique et 0 ≤ δ ≤ 1.

5. Électrode selon la revendication 4, dans laquelle Ln est La (lanthane), Ce (cérium) ou Praséodyme (Pr) ; A' est Ce (cérium), Sr (strontium), Ca (calcium) ou Ba (baryum) ; B est Ni (nickel), Fe (fer), Co (cobalt), Cr (chrome), Mn (manganèse) ou une combinaison de ces éléments.

6. L'électrode selon l'une des revendications précédentes, dans laquelle les nanoparticules comprennent du nickel ou un alliage de nickel.

7. Électrode selon la revendication 6, dans laquelle la composition chimique des nanoparticules en regard de la solution alcaline et la composition des nanoparticules en regard du substrat métallique ne sont pas identiques.

8. L'électrode selon l'une quelconque des revendications précédentes, dans laquelle l'épaisseur du revêtement en matériau céramique sur la surface du substrat est comprise entre 1 et 5 microns, et la densité de nombre de nanoparticules sur la surface du matériau céramique est d'au moins 50 nanoparticules par µm2 mais inférieure à 250 nanoparticules par µm2.

9. L'électrode selon l'une des revendications précédentes, dans laquelle l'électrode est une anode.

10. Procédé de fabrication de l'électrode selon l'une quelconque des revendications précédentes, comprenant une étape d'exsolution.

11. Procédé selon la revendication 10, dans lequel l'exsolution des nanoparticules métalliques du matériau céramique précurseur dans l'étape d'exsolution est obtenue par au moins l'une des méthodes suivantes:
a. l'exposition à des températures comprises entre 700 et 1100 degrés Celsius et à des atmosphères réductrices,
b. l'exposition à des températures comprises entre 700 et 1100 degrés Celsius et au plasma radiofréquence,
c. l'exposition à des températures comprises entre 500 et 900 degrés Celsius et au potentiel électrique.

12. Méthode selon la revendication 11, comprenant les étapes suivantes:
1) Fournir un substrat métallique en nickel (101),
2) Une étape d'imprégnation, dans laquelle un matériau céramique de base est déposé sur la surface du substrat métallique en nickel par imprégnation,
3) une étape ultérieure de séchage à une température de séchage comprise entre 50 et 150 degrés Celsius,
4) Une étape ultérieure de calcination à une température de calcination comprise entre 450 et 550 degrés Celsius, formant ainsi le matériau céramique précurseur (102),
5) L'étape de l'exsolution,
dans lequel le matériau céramique précurseur comprend un titanate de lanthanide dopé déficient en site A, et y est compris entre 0,05 ≤ y ≤ 0,2.

13. Méthode selon la revendication 11, comprenant les étapes suivantes:
1) Fourniture d'un substrat métallique en nickel,
2) Une étape de synthèse, dans laquelle on obtient un matériau céramique précurseur avec une structure de type pérovskite déficiente en site A (A1-yBO3-δ'), y est dans la plage de 0,05 ≤ y ≤ 0,2.,
3) Une étape de revêtement, dans laquelle le matériau céramique précurseur A1-yBO3-δ' est déposé sur la surface du substrat métallique en nickel.,
4) une étape ultérieure de séchage facultative à une température de séchage comprise entre 50 et 150 degrés Celsius,
5) une étape ultérieure de calcination facultative à une température de calcination comprise entre 450 et 550 degrés Celsius
6) L'étape de l'exsolution.

14. Cheminée d'électrolyse alcaline comprenant au moins une électrode selon l'une quelconque des revendications précédentes.

15. Procédé d'électrolyse de l'eau en milieu alcalin utilisant la pile d'électrolyse alcaline selon la revendication 14.
